# EUROPÄISCHE PATENTSCHRIFT

(11) **EP 0 552 484 B1**
(45) Veröffentlichungstag und Bekanntmachung des Hinweises auf die Patenterteilung: **14.09.1994**
(21) Anmeldenummer: 92121773.3
(22) Anmeldetag: 22.12.1992
(51) Int. Cl.: B01J 13/00

(54) **Formteile oder Platten aus Silica-Aerogelen**
Formed pieces or plates from silica-aerogel
Objets formés ou plaques à partir d'un aérogel de silice

(30) Priorität: 20.01.1992 DE 4201306
(43) Veröffentlichungstag der Anmeldung: 28.07.1993
(73) Patentinhaber: BASF Aktiengesellschaft, 67063 Ludwigshafen (DE)
(72) Erfinder: Mielke, Manfred, W-6900 Heidelberg (DE); Seybold, Günther, Dr., W-6708 Neuhofen (DE)

(56) Entgegenhaltungen:
- EP-A- 0 390 397
- DE-A- 3 033 515

## Beschreibung

Die herausragenden Produkteigenschaften von überkritisch getrockneten Silica-Aerogelteilen liegen in der Kombination von hoher Lichtdurchlässigkeit (Transparenz) und niedriger Wärmeleitfähigkeit (λ10°C = 0,023 W/mK).

Aerogel kann deshalb auch vorteilhaft als transparenter Isolierstoff in Doppelverglasungen gefüllt werden, um den Wärmeverlustkoeffizienten der Doppelverglasung zu vermindern.

Bei der Herstellung von Silica-Aerogelen wird das die flüssige Phase enthaltende Lyogel unter überkritischen Bedingungen in ein nur noch eine gasförmige Phase enthaltendes Gel, das Aerogel, überführt. Unabhängig von den Ausgangsprodukten, sei es Natriumsilikat (Wasserglas) und Schwefelsäure, seien es organische Siliziumverbindungen und Säuren, muß nach Ablauf der Kondensationsreaktion über einen Sol-Gel-Prozeß eine Trocknung vorgenommen werden, die keine Schrumpfung der porösen Gelstruktur verursacht. In einer Vielzahl von Patenten wurde die Herstellung von Aerogelen bereits ausführlich vorbeschrieben, z.B. in US 2 093 454, US 2 188 007, US 2 249 767 und US 3 434 912.

Die für diese spezielle Trocknung einzuhaltenden überkritischen Bedingungen erfordern technisch aufwendige Reaktionsautoklaven, die sehr hohen Drücken und Temperaturen widerstehen müssen.

Der technische Aufwand vergrößert sich noch erheblich, wenn das Aerogel in Form von großformatigen Platten oder Formteilen in einem Hochdruckreaktor hergestellt werden soll, wie vorbeschrieben in den Patenten US 4 327 065, US 4 402 927, US 4 432 956 und US 4 610 863. Die Raumzeit-Ausbeute wird für größere Formteile von mehr als 10 cm Kantenlänge durch die bei überkritischer Trocknung einzuhaltenden Verfahrensparameter, wie Durchfahren von zeitaufwendigen Temperatur- und Druckkurven sowie Öffnen und Schließen großer hochdruckdichter Ein- und Auslässe unwirtschaftlich.

Vorteilhafter ist es, kleine Aerogelteilchen unterschiedlicher Gestalt, d.h. in Form von Perlen bzw. Plättchen mit wenigen Millimetern bzw. Zentimetern Durchmesser, diesen überkritischen Bedingungen zu unterwerfen, wie z.B. nach der US 4 667 417.

Die genannten Teilchenformen und -größen lassen sich wesentlich einfacher handhaben und mit wirtschaftlich günstiger Raum-Zeit-Ausbeute durch den Hochdruckreaktor hindurch bewegen.

Der Nachteil bei diesem Verfahren beseht darin, daß das Aerogel nicht mehr in größeren Platten oder Formteilen anfällt, sondern nur noch als Schüttmaterial.

Versuche, die Aerogelperlen oder -plättchen mit Klebern unterschiedlicher Art zu binden, zeigen den großen Nachteil, daß die so herstellbaren Formteile praktisch lichtundurchlässig werden und somit eine wichige Materialeigenschaft des Aerogels verloren geht.

Es bestand deshalb die Aufgabe, aus Aerogel von Millimeter bis zu Zentimeter Teilchengröße selbsttragende Formteile oder Platten herzustellen.

Diese Aufgabe wurde durch die kennzeichnenden Merkmale der Patentansprüche 1 bis 15 gelöst.

Versuche, die Aerogelkügelchen einfach zu verpressen, führten zu hohen Dichten von 300 bis 600 kg/m³, die aus physikalischen Gründen unerwünscht sind. Werden nämlich Fällungskieselsäuren als Lyogele unter Normalbedingungen getrocknet, entstehen sogenannte Silicagele oder allgemein Xerogele, die diesen Dichtebereich auch ohne überkritische Trocknung erreichen, aber nicht die herausragenden Eigenschaften des Aerogels bezüglich Lichtdurchlässigkeit und Wärmeleitfähigkeit besitzen, sondern hierin deutlich abfallen.

Es hat sich nun aber gezeigt, daß sich das Aerogel sogar ohne Zusatz von Klebern zu lichtdurchlässigen Formteilen verbinden läßt, wenn zusätzlich zum Druck gleichzeitig höhere Temperaturen auf das Material einwirken.

Durch Verpressen von Aerogelen in einem Ofen bei Temperaturen von 500 bis 1000°C und in einem Druckbereich von 0,5 bis 10 bar können selbsttragende Platten oder Formteile hergestellt werden. Der Preßdruck über der Aerogelschicht kann dabei einfach durch Absenken entsprechender Gewichte auf beweglichen Stempeln oder über eine hydraulische Presse erzeugt werden. Die thermisch verpreßten Aerogelformteile bestehen aus perlförmigen Teilchen von 0,05 bis 8 mm Durchmesser. Die oberen und unteren Flächen dieser Plättchen besitzen die geometrische Form von gleichseitigen Dreiecken, von Quadraten, von Sechs- bzw. von Achtecken.

Diese so erzeugten Formteile werden im weiteren Herstellverfahren durch äußere Kaschierung mit transparenten Kunststoffplatten oder Folien aus unterschiedlichen polymeren Materialien, wie Polymethylmethacrylat, Polyurethan, Polyacrylat, Polycarbonat, Polyvinylchlorid, Polyvinylfluorid, Polyvinylidenchlorid, Polyvinylidenfluorid, Polytetrafluorethylen, Ethylentetrafluorethylen-Copolymere, Polyethersulfon, Polyethylenglykolterephthalat, Silicon-Kautschuke, aber auch durch Quarz-, Glimmer- oder Glasplatten unterschiedlicher Zusammensetzung vor äußeren Einflüssen wie Wasserzutritt bzw. mechanische Beschädigung geschützt.

Diese Kaschierungen der Aerogeloberfläche kann über thermische Druckbelastung unterhalb oder wenige Grade oberhalb der Erweichungstemperaturen der Polymer- oder Glasschichten erfolgen, aber auch durch eine Evakuierung der jeweils umhüllenden Folien bzw. Platten.

Zur äußeren wie inneren Verstärkung der Aerogelplatten können zusätzlich vorteilhaft Matten oder Gewebestrukturen aus Glas- oder Quarz auf- oder eingelegt werden, wobei Strukturen verwendet werden, die das Licht weitgehend hindurch treten lassen und möglichst wenig zurückstreuen.

Das aus Teilchen von 0,1 Millimeter bis Zentimeter Durchmesser bestehende Aerogel kann auch für nicht transparente Anwendungen mit Trübungsmitteln wie Rußen, Titandioxiden, Eisenoxiden (Fe₃O₄), Glimmern, Ilmenit und Mischoxiden versetzt sein zur Verbesserung der Wärmeleitung besonders im Bereich von Temperaturen oberhalb von ca. 100°C.

### Beispiel 1

Aerogelperlen mit 1 bis 6 mm Teilchendurchmesser wurden unter Zutritt von Luft bei 800°C über einen Zeitraum von 20 Minuten zwischen zwei Quarzscheiben zu unterschiedlichen Schichtstärken verpreßt. Die Schichtdicken liegen zwischen 10 und 36 mm. Nach rechnerischem Abzug der Quarzscheiben wurden Aerogeldichten von ca. 160 kg/m³ erreicht.

Bei einer Wellenlänge von 550 nm wurden am Spektralphotometer Cary 14 vor der Ulbrichtkugel (Beleuchtung: gerichtet 8°/Messung: diffus-gerichtet) unter Kompensation der beiden Quarzgläser folgende Transmissionswerte gemessen: 75 % für 10 mm Schichtdicke, 48 % für 14 mm Schichtdicke, 25 % für 24 mm Schichtdicke und 10 % für 36 mm Schichtdicke.

### Beispiel 2

Gemahlenes feinteiliges Aerogel (Durchmesser 120 µm) wurde in Abhängigkeit von der Temperatur zwischen 300°C bis 900°C mit 1,8 bar über 30 Minuten verpreßt. Die Preßlinge bei 300 und 400°C waren sehr brüchig und hatten keine Eigenstabilität. Ab 500°C bis 900°C konnten gute bis sehr gute mechanische Festigkeiten bei Dichten der Probekörper von 190 kg/m³ für 500°C, 200 kg/m³ für 700°C und 245 kg/m³ für 900°C erzielt werden.

Die Preßlinge waren je nach Preßtemperatur braun bie 300 bis 400°C, schwarz bei 500°C, teils schwarz, teils weiß bei 700°C und durchgehend weiß bei 900°C gefärbt. Die festgestellte Schwarzfärbung des Aerogels beruht auf durch Herstellung bedingte Reste von organischem Kohlenstoff, der unter Sauerstoffzutritt zu CO₂ abbrennt.

### Beispiel 3

Aerogelperlen von 1 bis 6 mm Durchmesser wurde 20 Minuten unter Zutritt von Luft bei 600°C mit 22,2 bar zu einer Dichte von 155 kg/m³ bzw. mit 8,8 bar zu einer Dichte 210 kg/m³, zu leichtbraun gefärbten Formteilen, verpreßt. Bei 800°C wurden unter sonst gleichen Bedingungen bei 2,2 bar Druckbelastung eine Dichte von 180 kg/m³ bzw. mit 8,8 bar eine Dichte von 230 kg/m³ erreicht, wobei die Aerogel-Formteile lichtdurchlässig blieben.

### Beispiel 4

Mit 23 Gew.-% TiO₂ (Rutil) weiß eingefärbte Aerogelteilchen mit einem mittleren Teilchendurchmesser von 1,3 mm wurden für 20 bzw. 60 Minuten bei 800°C mit 1,8 bar zu Formteilen mit Dichten von 260 bzw. 270 kg/m³ unter Zutritt von Luft verpreßt.

### Beispiel 5

Mit 23 Gew.-% Fe₃O₄ schwarz eingefärbte Aerogelteilchen von 1,3 mm mittlerem Durchmesser wurde bei 800°C in 20 Minuten zu stabilen Formteilen mit einer Dichte von 300 kg/m³ unter Stickstoff als Schutzgas verpreßt.

### Beispiel 6

Mit 13 Gew.-% Ruß schwarz eingefärbte Aerogelteilchen von 1,3 mm mittlerem Durchmesser wurden bei 800°C über 20 Minuten zu stabilen Formteilen mit Dichten von 200 kg/m³ unter Stickstoff als Schutzgas verpreßt.

### Beispiel 7

Mit 23 Gew.-% Glimmer (Muskovit, mittlere Teilchengröße 20 µm) eingefärbte Aerogelteilchen von 1,3 mm Durchmesser wurden bei 800°C über 20 Minuten zu stabilen Formteilen mit Dichten von 250 kg/m³ unter Luftzutritt verpreßt.

### Beispiel 8

Mit einem Gemisch aus 8,1 Gew.-% TiO₂, 8,1 Gew.-% Cr_{1,4} Fe_{0,6}O₃ und 4 Gew.-% Ca eingefärbte Aerogelteilchen von 2,4 mm mittleren Durchmesser wurden bei 800°C über 20 Minuten zu stabilen Formteilen mit Dichten von 275 kg/m³ unter Stickstoff als Schutzgas verpreßt.

### Beispiel 9

Die nach Beispiel 3 hergestellten Aerogelformteile wurden zusätzlich mit Silikonkautschuk (z.B. Elastosile von der Wacker-Chemie) beschichtet. Es ergaben sich lichtdurchlässige Formteile mit einer Millimeter dünnen transparenten Schutzschicht.

## Patentansprüche

1. Formteil, das überkritisch getrocknete Silica-Aerogelteile in Form von sphärischen Teilchen von 0,1 bis 10 mm Durchmesser oder flächigen Stücken mit 2 bis 30 mm Dicke und 1 bis 5 cm Durchmesser zur Basis hat, dadurch gekennzeichnet, daß das Formteil durch Pressen bei Temperaturen im Bereich von 500 bis 1000°C und Drücken von 0,5 bis 10 bar, gegebenenfalls unter Schutzgas wie Stickstoff, ohne Zusatz von Bindemitteln, hergestellt wird.

2. Formteil nach Anspruch 1, dadurch gekennzeichnet, daß das Formteil lichtdurchlässig ist.

3. Formteil nach Anspruch 1 bis 2, dadurch gekennzeichnet, daß es mit Quarz-, Glimmer- oder Glasplatten zu einem lichtdurchlässigen Element verpreßt wird.

4. Formteil nach Anspruch 1 bis 3, dadurch gekennzeichnet, daß es mit einer transparenten Polymerschicht auf Basis von Polymethacrylat, Polyurethan, Polyacrylat, Polycarbonat, Polyvinylchlorid, Polyvinylfluorid, Polyvinylidenchlorid, Polyvinylidenfluorid, Polytetrafluorethylen, Ethylentetrafluorethylen-Copolymeren, Polyethersulfon, Polyethylenglykoltherephthalat oder Silicon-Kautschuken kaschiert ist.

5. Formteil nach Anspruch 1 bis 4, dadurch gekennzeichnet, daß es feinverteilten Ruß als Trübungsmittel in Mengen von 5 bis 20 % enthält.

6. Formteil nach Anspruch 1 bis 4 dadurch gekennzeichnet, daß es feinverteiltes Titandioxid (Rutil) als Trübungsmittel in Mengen von 10 bis 50 % enthält.

7. Formteil nach Anspruch 1 bis 4, dadurch gekennzeichnet, daß es feinverteiltes Fe₃O₄ als Trübungsmittel in Mengen von 10 bis 50 Gew.-% enthält.

8. Formteil nach Anspruch 1 bis 4, dadurch gekennzeichnet, daß es feinverteilten Glimmer (Muskovit) als Trübungsmittel in Mengen von 20 bis 40 Gew.-% enthält.

9. Formteil nach Anspruch 1 bis 4, dadurch gekennzeichnet, daß es feinverteiltes Ilmentit-FeTiO₃ als Trübungsmittel in Mengen von 10 bis 40 Gew.-% enthält.

10. Formteil nach Anspruch 1 bis 9, dadurch gekennzeichnet, daß es aus Aerogelperlen von 2 bis 6 Millimetern Durchmesser besteht.

11. Formteil nach Anspruch 1 bis 9, dadurch gekennzeichnet, daß es aus Aerogelperlen von unter 2 Millimetern, vorzugsweise von 0,1 bis 0,5 Millimetern, besteht.

12. Formteil nach Anspruch 1 bis 9, dadurch gekennzeichnet, daß es aus einer Mischung grober (Anspruch 10) und feiner Aerogelperlen (Anspruch 11) besteht, die in Volumenverhältnissen von 80:20 bis 50:50 gemischt und verpreßt werden.

13. Formteil nach Anspruch 1 bis 12, dadurch gekennzeichnet, daß es mit gitterförmigen Quarz- oder Glasfasergewebestrukturen außen und gegebenenfalls auch innen zur mechanischen Verstärkung verpreßt wird.

14. Formteil nach Anspruch 1 bis 13, dadurch gekennzeichnet, daß Quarz-, Aluminiumoxid- bzw. Aluminiumsilikatfasern von bis zu 10 µm Dicke und bis zu 5 cm Länge eingearbeitet sind zur weiteren Verstärkung.

15. Formteil nach Anspruch 1 bis 14, dadurch gekennzeichnet, daß es mit feinverteilten niederschmelzenden Gläsern, Glasloten, Oxiden oder Hydroxiden, Karbonaten, Sulfaten und Phosphaten der Alkali- oder Erdalkalidimetalle, Natriumsilikaten, Boraten, Borax und/oder Natriumperborat als organischem Bindemittel versetzt ist.

## Claims

1. A molding based on supercritically dried silica aerogel parts in the form of spherical particles having a diameter of from 0.1 to 10 mm or sheet-like pieces having a thickness of from 2 to 30 mm and a diameter of from 1 to 5 cm, wherein the molding is produced by pressing at from 500 to 1000°C and at from 0.5 to 10 bar, if necessary under a protective gas, such as nitrogen, without addition of binders.

2. A molding as claimed in claim 1 which is transparent to light.

3. A molding as claimed in claim 1 or 2, which is pressed with quartz, mica or glass sheets to give a light-transparent element.

4. A molding as claimed in any of claims 1 to 3, which is laminated with a transparent polymer layer based on polymethacrylate, polyurethane, polyacrylate, polycarbonate, polyvinyl chloride, polyvinyl fluoride, polyvinylidene chloride, polyvinylidene fluoride, polytetrafluoroethylene, ethylene-tetrafluoroethylene copolymers, polyether sulfone, polyethylene glycol terephthalate or silicone rubbers.

5. A molding as claimed in any of claims 1 to 4, which contains finely divided carbon black as opacifier in an amount of from 5 to 20%.

6. A molding as claimed in any of claims 1 to 4, which contains finely divided titanium dioxide (rutile) as opacifier in an amount of from 10 to 50%.

7. A molding as claimed in any of claims 1 to 4, which contains finely divided Fe₃O₄ as opacifier in an amount of from 10 to 50%.

8. A molding as claimed in any of claims 1 to 4, which contains finely divided mica (muscovite) as opacifier in an amount of from 20 to 40% by weight.

9. A molding as claimed in any of claims 1 to 4, which contains finely divided ilmenite FeTiO₃ as opacifier in an amount of from 10 to 40% by weight.

10. A molding as claimed in any of claims 1 to 9, which comprises aerogel beads having a diameter of from 2 to 6 millimeters.

11. A molding as claimed in any of claims 1 to 9, which comprises aerogel beads having a diameter of less than 2 millimeters, preferably from 0.1 to 0.5 millimeters.

12. A molding as claimed in any of claims 1 to 9, which comprises a mixture of coarse (claim 10) and fine (claim 11) aerogel beads, which are mixed in a volume ratio from 80:20 to 50:50 and pressed.

13. A molding as claimed in any of claims 1 to 12, which is pressed with mesh-form quartz fiber or glass fiber woven fabric structures on the outside and possibly also on the inside for mechanical reinforcement.

14. A molding as claimed in any of claims 1 to 13, wherein quartz fibers, aluminum oxide fibers or aluminum silicate fibers having a thickness of up to 10 µm and a length of up to 5 cm are incorporated for further reinforcement.

15. A molding as claimed in any of claims 1 to 14, wherein finely divided, low-melting glasses, glass solders, oxides or hydroxides, carbonates, sulfates and phosphates of the alkali metals or alkaline earth metals, sodium silicates, borates, borax and/or sodium perborate have been added as organic binder.

## Revendications

1. Article moulé qui comporte des parties d'aérogel de silice séchées à l'état supercritique, sous forme de particules sphériques d'un diamètre de 0,1 à 10 mm, ou des pièces plates d'une épaisseur de 2 à 30 mm et d'un diamètre de 1 à 5 mm, pour base, caractérisé en ce que l'on fabrique l'article moulé par pression à des températures de 500 à 1000°C et des pressions de 0,5 à 10 bars, éventuellement sous un gaz protecteur, comme l'azote, sans addition de liants.

2. Article moulé suivant la revendication 1, caractérisé en ce qu'il laisse passer la lumière.

3. Article moulé suivant l'une quelconque des revendications 1 et 2, caractérisé en ce qu'il est comprimé avec des plaques de quartz, de mica ou de verre en un élément qui laisse passer la lumière.

4. Article moulé suivant l'une quelconque des revendications 1 à 3, caractérisé en ce qu'il est revêtu d'une couche de polymère transparente à base de polyméthacrylate, de polyuréthanne, de polyacrylate, de polycarbonate, de poly(chlorure de vinyle), de poly(fluorure de vinyle), de poly(chlorure de vinylidène), de poly(fluorure de vinylidène), de polytétrafluoréthylène, de copolymères d'éthylènetétrafluoréthylène, de polyéthersulfone, de poly(téréphtalate d'éthylèneglycol) ou de caoutchoucs de silicone.

5. Article moulé suivant l'une quelconque des revendications 1 à 4, caractérisé en ce qu'il contient de la suie ou du noir de carbone en fine division à titre d'agent de turbidité, en proportions de 5 à 20%.

6. Article moulé suivant l'une quelconque des revendications 1 à 4, caractérisé en ce qu'il contient du bioxyde de titane (rutile) en fine division à titre d'agent de turbidité en proportions de 10 à 50%.

7. Article moulé suivant l'une quelconque des revendications 1 à 4, caractérisé en ce qu'il contient du Fe₃O₄ en fine division à titre d'agent de turbidité en proportions de 10 à 50%.

8. Article moulé suivant l'une quelconque des revendications 1 à 4, caractérisé en ce qu'il contient du mica (muscovite) en fine division à titre d'agent de turbidité en proportions de 20 à 40%.

9. Article moulé suivant l'une quelconque des revendications 1 à 4, caractérisé en ce qu'il contient de l'ilménite-FeTiO₃ en fine division à titre d'agent de turbidité en proportions de 10 à 40%.

10. Article moulé suivant l'une quelconque des revendications 1 à 9, caractérisé en ce qu'il est constitué de perles d'aérogel d'un diamètre de 2 à 6 millimètres.

11. Article moulé suivant l'une quelconque des revendications 1 à 9, caractérisé en ce qu'il est constitué de perles d'aérogel d'un diamètre inférieur à 2 millimètres, de préférence de 0,1 à 0,5 millimètre.

12. Article moulé suivant l'une quelconque des revendications 1 à 9, caractérisé en ce qu'il est constitué d'un mélange de perles d'aérogel grossières (revendication 10) et fines (revendication 11) que l'on mélange et comprime dans les rapports volumiques de 20:80 à 50:50.

13. Article moulé suivant l'une quelconque des revendications 1 à 12, caractérisé en ce qu'il est comprimé avec des structures en tissu de fibres de quartz ou de verre réticulées à l'extérieur et éventuellement aussi à l'intérieur en vue de son renforcement mécanique.

14. Article moulé suivant l'une quelconque des revendications 1 à 13, caractérisé en ce qu'on lui incorpore des fibres de quartz, d'oxyde d'aluminium, ou de silicate d'aluminium, d'une épaisseur allant jusqu'à 10 µm et d'une longueur allant jusqu'à 5 cm, en vue d'un renforcement complémentaire.

15. Article moulé suivant l'une quelconque des revendications 1 à 14, caractérisé en ce qu'il est additionné, à titre de liant organique, de borax et/ou de perborate de sodium, de borates, de silicates de sodium, de sulfates et de phosphates des métaux alcalins ou alcalino-terreux, de carbonates, d'hydroxydes ou d'oxydes, de verres de soudure, de verres à bas points de fusion et finement divisés.
